# FASCICULE DE BREVET EUROPEEN

(11) **EP 2 780 194 B1**
(45) Date de publication et mention de la délivrance du brevet: **11.03.2020**
(21) Numéro de dépôt: 12780215.5
(22) Date de dépôt: 05.11.2012
(51) Int. Cl.: B60N 3/00, B60N 2/20

(54) **SIÈGE DE VÉHICULE ÉQUIPÉ D'UNE TABLETTE AMOVIBLE**
FAHRZEUGSITZ MIT ABNEHMBARER ABLAGE
VEHICLE SEAT PROVIDED WITH A REMOVABLE TRAY

(30) Priorité: 16.11.2011 FR 1160412
(43) Date de publication de la demande: 24.09.2014
(73) Titulaire: Renault S.A.S., 92100 Boulogne-Billancourt (FR)
(72) Inventeur: ROUXEL, Yves, F-78000 Versailles (FR); FOLLIOT, Herve, F-78580 Maule (FR)
(86) Numéro de dépôt international: PCT/EP2012/071843
(87) Numéro de publication internationale: WO 2013/072211

(56) Documents cités:
- FR-A3- 2 924 387
- GB-A- 2 424 575

## Description

L'invention se rapporte à un siège de véhicule équipé d'une tablette amovible. Les sièges de véhicule sont des éléments incontournables et imposants dans un habitacle de véhicule, et il peut alors s'avérer intéressant des les aménager afin qu'ils puissent assurer des fonctions supplémentaires, tout en conservant un encombrement sensiblement constant. Un siège de véhicule selon l'invention a été modifié par rapport à un siège conventionnel, afin de remplir une fonction nouvelle.

Il est supposé qu'un siège de véhicule selon l'invention comprend, de façon usuelle et implicite, une assise et un dossier rabattable.

Les sièges de véhicule dotés d'une tablette existent et ont déjà fait l'objet de brevet. On peut par exemple citer le brevet FR2911548, qui se rapporte à un siège de véhicule dont la face arrière du dossier est dotée d'une tablette mobile. Plus spécifiquement, une fois que le dossier a été replié sur l'assise, la tablette se retrouve dans une position sensiblement horizontale, et peut pivoter autour d'un axe vertical afin de pouvoir se déporter latéralement d'un coté ou de l'autre du siège. Bien que fonctionnelle et ergonomique au niveau de sa fonction de support, cette tablette est reliée en permanence au siège, sans pouvoir être dissociée de celui-ci, et sans pouvoir être utilisée à un emplacement différent de celui de son rangement sur le dossier dudit siège.

Un autre exemple de siège est décrit dans GB 2 424 575. Un siège de véhicule selon l'invention comporte une tablette rangée dans son dossier, et qui peut rapidement et simplement être retirée de ce dossier, afin d'être utilisée indépendamment de son lieu de rangement à l'arrière du dossier. Une fois retirée de son lieu de stockage derrière le dossier, la tablette peut être fixée sur une autre zone dudit siège, ou sur un autre élément de l'habitacle, et peut même être utilisée à l'extérieur du véhicule. Il est supposé que la tablette peut être désolidarisée du siège rapidement et sans effort, et sans l'aide du moindre outillage extérieur.

L'invention a pour objet un siège de véhicule automobile comprenant une assise et un dossier repliable comportant une face arrière dotée d'une tablette, le dossier étant apte à être replié sur l'assise de manière à amener sa face arrière dans une position sensiblement horizontale. La principale caractéristique d'un siège selon l'invention, est que la tablette est apposée contre la face arrière du dossier et est maintenu contre ladite face au moyen d'un mécanisme de blocage doté d'un organe d'actionnement, une pression exercée sur ledit organe permettant de libérer la tablette afin qu'elle puisse être retirée du dossier. Autrement dit, la tablette ne comprend aucun point de fixation intrinsèque lui permettant d'être arrimée au siège. Elle est simplement maintenue dans une position donnée contre le dossier dudit siège, au moyen d'un mécanisme actionnable par pression. Le temps de libération de la tablette correspond au temps de pression exercée sur l'organe d'actionnement et est donc extrêmement court, de l'ordre de la seconde. Le dispositif de montage de la tablette dans le dossier du siège est donc simplifié à l'extrême, et peut se résumer à l'interaction entre ladite tablette et le mécanisme de blocage. De façon préférentielle, la pression exercée sur l'organe d'actionnement est manuelle, par l'intermédiaire d'un ou deux doigts. La tablette peut représenter une multitude d'objets, comme par exemple, une console de jeu, un ordinateur portable, ou un support de document papier. Il est naturellement supposé que la tablette peut réintégrer tout aussi rapidement et simplement son lieu de rangement derrière le dossier. Le processus de montage/démontage de la tablette est donc parfaitement réversible.

Avantageusement, le mécanisme de blocage implique au moins une butée mécanique mise au contact de la tablette pour la maintenir contre le dossier, une pression exercée sur l'organe d'actionnement provoquant le déplacement de chaque butée. Il s'agit d'une configuration de mécanisme de blocage simple, peu coûteuse, peu encombrante, et facile à mettre en œuvre en ne nécessitant aucun effort particulier.

Préférentiellement, le mécanisme de blocage est muni d'un élément de rappel conçu pour permettre à l'organe d'actionnement de retrouver sa position initiale après avoir subi une pression. De cette manière, cet élément de rappel contribue à maintenir par défaut, le mécanisme dans une position de blocage de la tablette.

De façon avantageuse, le dossier présente un appui-tête et un évidement prévu pour loger la tablette, le mécanisme de blocage étant situé au niveau de l'extrémité de l'évidement la plus proche dudit appui-tête. L'appui-tête représente la zone la plus haute du dossier lorsque celui-ci se retrouve dans un plan vertical, et la zone la plus avancée dudit dossier lorsque celui-ci est replié sur l'assise. L'évidement est prévu pour loger la tablette de manière à ce que celle-ci ne saille pas dudit dossier. Généralement la tablette est une pièce plane de faible épaisseur, et l'évidement est une cavité ayant approximativement les mêmes dimensions et la même forme que celles de la tablette.

De façon préférentielle, l'extrémité de l'évidement la plus éloignée de l'appui-tête présente un renfoncement et la tablette comporte un corps plan terminé par un bord incliné, ladite tablette étant logée dans l'évidement de sorte que son bord incliné vienne se loger dans ledit renfoncement, et de sorte que l'extrémité opposée dudit corps interagisse avec le mécanisme de blocage. Pour cette configuration, la tablette présente deux extrémités de blocage opposées, l'une interagissant avec le mécanisme de blocage et l'autre étant enfoncée dans le dossier, les deux zones de contact ainsi formées contribuant à maintenir la tablette contre le dossier. De plus, lorsque la tablette est libérée au niveau du mécanisme de blocage, elle peut être retirée du dossier par un pivotement préalable autour de son bord incliné rentré dans le renfoncement.

Avantageusement, le renfoncement se traduit par une inclinaison du fond de l'évidement, le bord incliné de la tablette venant au contact dudit fond incliné. De cette manière, le profil de la tablette épouse parfaitement le profil du fond de l'évidement, de sorte que l'intégralité de son corps et de son bord incliné se retrouvent au contact du fond de l'évidement. Par conséquent, la tablette est étroitement plaquée contre le dossier du siège, sans émerger de l'évidement.

Préférentiellement, le bord incliné de la tablette comporte deux lobes proéminents, l'évidement présentant une avancée centrale surplombant ledit renfoncement, et la tablette est logée dans l'évidement de sorte que les deux lobes soient insérés dans le renfoncement de par et d'autre de ladite avancée centrale. L'avancée centrale de l'évidement sert à éviter à la tablette de sortir dudit évidement, notamment lorsque le dossier est en position verticale. Cette avancée joue ainsi le rôle d'une butée de retenue pour la tablette placée dans l'évidement. Le positionnement central de l'avancée, permet le pivotement de la tablette autour des deux lobes, au moment de l'extraire du logement pour la retirer du dossier.

De façon avantageuse, la face arrière du siège est dotée d'au moins une rainure permettant de recevoir la tablette et la maintenir dans une position dressée lorsque le dossier se retrouve sensiblement horizontal, et après que la tablette eût été retirée de l'évidement. Il est supposé que la largeur de la rainure est compatible avec l'épaisseur de la tablette afin que celle-ci puisse venir s'y loger partiellement. Les rainures peuvent indifféremment être pratiquées au niveau de l'appui-tête du dossier ou dans l'évidement. A chaque rainure correspond une position particulière de la tablette, l'objectif étant d'orienter la tablette vers un siège voisin. Pour cette configuration, le dossier du siège sert de socle de soutien à la tablette. Chaque rainure peut être rectiligne ou curviligne. Ce type de soutien est particulièrement peu encombrant, car le socle est constitué par le dossier du siège déjà présent dans le véhicule, et que chaque rainure remplace avantageusement une pièce d'interface volumineuse pouvant servir à la fixation de la tablette dans sa position dressée.

L'invention se rapporte de plus à une tablette destinée à équiper un siège selon l'invention, et dont la principale caractéristique technique est qu'elle comprend un corps plan allongé, présentant à l'une de ses extrémités un bord incliné doté de deux lobes latéraux, et à son extrémité opposée une pince destinée à enserrer un document papier. Un document papier peut par exemple être constitué d'une seule feuille, ou d'un bloc ou d'un livre.

L'invention se rapporte enfin à un véhicule comportant une rangée d'au moins deux sièges, et dont la principale caractéristique technique est qu'il comprend au moins un siège conforme à l'invention.

Selon un mode de réalisation préféré d'un véhicule selon l'invention, ledit véhicule comporte une rangée de trois sièges, dont le siège central est conforme à l'invention. De cette manière, une fois que le dossier du siège central a été replié, la tablette peut être retiré par l'un des deux occupants des deux sièges voisins, et être dressée sur le dossier replié en étant orientée vers l'un desdits sièges voisins. Le conducteur ou le passager peut ainsi bénéficier de cette tablette.

Les sièges selon l'invention présentent l'avantage d'être d'un encombrement constant par rapport à un siège conventionnel déjà existant, tout en assurant une fonctionnalité supplémentaire à travers la tablette amovible. Ils ont de plus l'avantage de faire intervenir un minimum de pièces pour maintenir la tablette rangée dans le dossier et pour la dresser en position fonctionnelle sur le dossier. Ils sont donc faciles à fabriquer et sont donc d'un coût modéré.

On donne ci-après, une description détaillée d'un mode de réalisation préféré d'un siège selon l'invention, en se référant aux figures 1 à 4.
- La figure 1 est une vue en perspective de derrière d'un siège selon l'invention dans une position fonctionnelle,
- La figure 2 est une vue en perspective du siège de la figure 2, dans une position repliée, la tablette étant rangée dans le dossier,
- La figure 3 est la vue de la figure 2, la tablette étant dressée sur le siège replié,
- La figure 4 est une vue partielle en perspective de l'intérieur d'u véhicule selon l'invention.

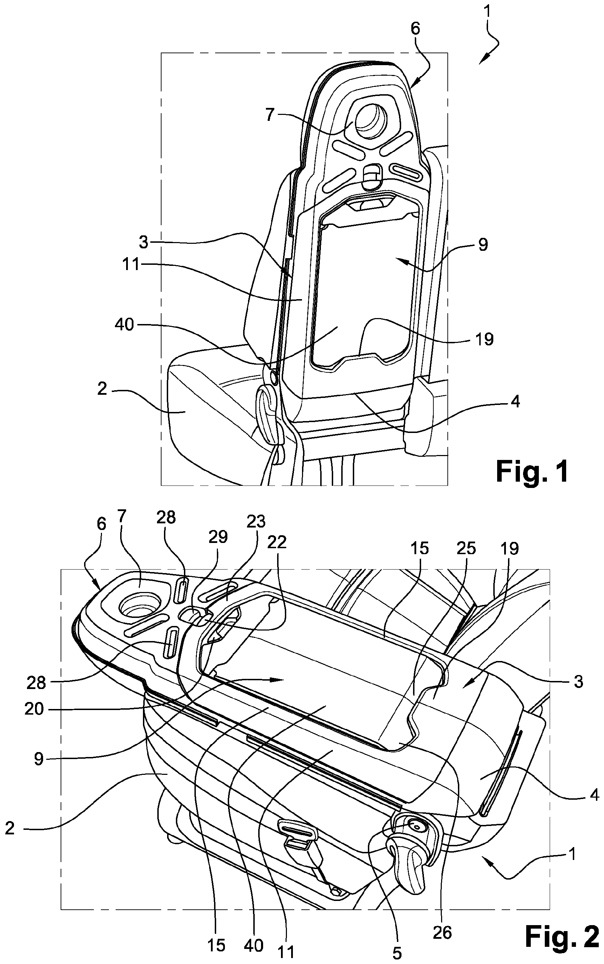

En se référant aux figure 1 et 2, un siège 1 selon l'invention comprend conventionnellement une assise 2 et un dossier 3 apte à pivoter entre une position fonctionnelle pour laquelle il est dressé sur l'assise 2, comme le montre la figure 1, et une position repliée, sensiblement horizontale, pour laquelle il vient au contact de l'assise, comme le montre la figure 2. Le dossier 3 possède ainsi une première extrémité 4 proche de l'assise 2, et montée pivotante autour d'un axe 5 horizontal et transversal, et une deuxième extrémité 6 correspondant à un appui-tête 7. Il est supposé qu'un axe longitudinal du dossier 3 relie la première extrémité et la deuxième extrémité 4,6. Le dossier 3 comporte une face arrière dans laquelle est rangée une tablette 9 munie d'une pince 27, ladite tablette 9 étant plane et de faible épaisseur, et étant disposée sur ladite face arrière en assurant une certaine continuité au niveau de l'enveloppe extérieure du siège 1.

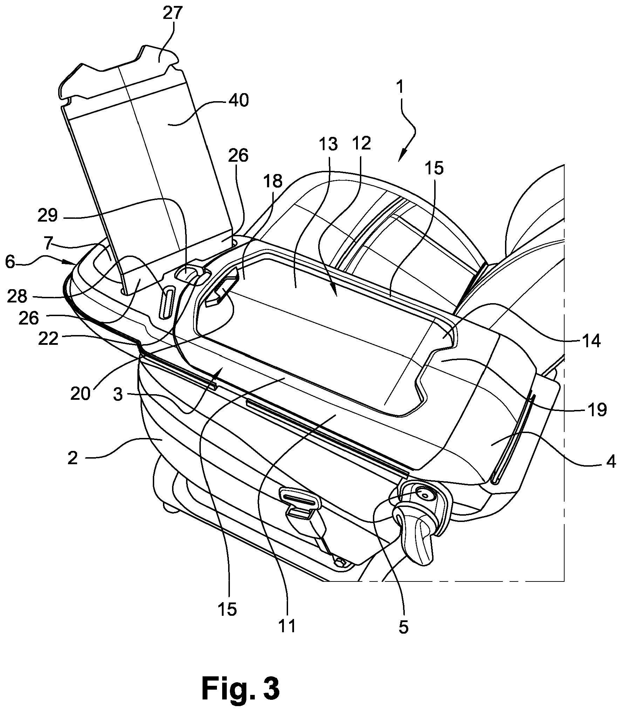

En se référant à la figure 3, le dossier 3 comporte un emplacement dans lequel est fixé un cadre 11 de réception de forme approximativement rectangulaire, dont l'épaisseur est inférieure à celle du dossier 3, dont la largeur est identique à celle du dossier 3 et dont la longueur est inférieure à celle du dossier 3. De cette manière, le cadre 11 est inclus dans le dossier 3 tout en délimitant partiellement sa largeur. Ce cadre 11 comprend un évidement 12 présentant un fond plan 13 prolongé par un renfoncement 14. La partie de l'évidement 12 correspondant au fond plan 13 est délimitée par deux grands segments 15 parallèles, par un petit segment 16 perpendiculaire auxdits grands segments 15, et par un segment profilé 17 permettant à l'évidement 12 de posséder un allongement central 18. Le renfoncement 14 se traduit par un fond incliné dans un sens qui accentue la hauteur dudit évidement 12, ledit fond incliné étant en continuité du fond plan 13 au niveau de son petit segment 15. Le cadre 11 possède une avancée 19 centrale de matière surplombant le renfoncement 14, ladite avancée 19 étant placée au droit dudit renfoncement 14, sans empiéter sur la partie de l'évidement 14 à fond plan 13. L'évidement 12 s'étend selon un axe longitudinal du dossier 3, de sorte que son allongement central 18 est situé à proximité de l'appui-tête 7, et de sorte que le renfoncement 14 se retrouve à proximité de l'axe 5 de rotation du dossier 3 sur l'assise 2. Le cadre 11 peut être retiré du dossier 3 au moyen d'une pression sur un plot 22, émergeant d'un bord 23 dudit cadre 11. Un mécanisme de blocage impliquant une butée mécanique est placé dans le cadre 11 de réception, au niveau de l'allongement central 18 de l'évidement 12, ledit mécanisme comprenant un bouton poussoir 20 d'actionnement, émergeant de l'évidement 12, entre un bord 23 d'extrémité dudit cadre 11 délimitant l'allongement central 18 de l'évidement 12, et la tablette 9.

En se référant aux figures 2 et 3, la tablette 9 est constituée par une plaque 40 plane de faible épaisseur, et de forme sensiblement rectangulaire, ladite plaque 40 étant prolongée selon un axe longitudinal par, d'une part, un rebord incliné 25 présentant deux lobes 26 latéraux, et d'autre part, une pince 27 de serrage conventionnelle, conçue pour maintenir au moins une feuille de papier contre la plaque 40. Cette tablette 9 sert donc de support à un document papier pour qu'une personne puisse lire ledit document ou puisse écrire dessus.

En se référant à la figure 2, en position de rangement, la tablette 9 occupe l'évidement 12, de manière à ce que son rebord incliné 25 se retrouve dans le renfoncement 14, les deux lobes 26 étant placés de par et d'autre de l'avancée centrale 19 du cadre 11, et de sorte que la plaque 40 soit au contact du fond plan 13 de l'évidement 12, l'extrémité de la plaque 40 comportant la pince 27 coopérant avec le mécanisme de blocage. La tablette 9 est rangée dans le dossier 3 sans qu'aucune de ses parties n'émerge de l'évidement 12, ladite tablette 9 assurant une certaine continuité de surface, au niveau de la face arrière dudit dossier 3. Lorsque la tablette 9 est rangée dans le cadre 11 de réception de la face arrière du dossier 3, le bouton poussoir 20 d'actionnement demeure accessible depuis l'extérieur du siège 1. Un élément de rappel est associé à ce bouton-poussoir 20 pour que celui-ci demeure, par défaut, dans une position en saillie en configuration de blocage. Ainsi, en l'absence de toute pression sur ledit bouton-poussoir 20, la tablette 9 se retrouve par défaut bloquée contre le dossier 3 du siège 1. La face arrière du dossier 3 correspondant à l'appui-tête 7 comprend quatre rainures 28 disposées en croix, deux rainures 28 étant alignées sur un premier axe, et les deux autres rainures 28 étant alignée sur un deuxième axe, lesdits axes se croisant, chaque rainure 28 d'un même axe étant située de chaque coté du point d'intersection fictif desdits axes. Chaque rainure 28 est matérialisée par une fente rectiligne de longueur finie, et qui est obturée par un élément amovible précontraint, chacun desdits éléments étant connecté à un bouton poussoir secondaire 29 placé à proximité du bouton-poussoir 20 d'actionnement. Chaque élément d'obturation occulte naturellement la rainure 28, une pression sur le bouton poussoir secondaire 29 entrainant le retrait momentané dudit élément pour libérer la rainure 28 afin d'y faire pénétrer la tablette 9.

En se référant à la figure 3, une fois que la tablette 9 a été retirée du dossier 3, elle peut être dressée sur ledit dossier 3 replié, au niveau des rainures 28. En effet, deux rainures 28 alignées sont destinées à recevoir les deux lobes 26 de la tablette 9 afin que celle-ci occupe une première position, les deux autres rainures 28 alignées permettant à ladite tablette 9 d'occuper une deuxième position. La tablette 9 peut ainsi être dressée sur le siège 1 replié de façon à se retrouver dans un plan légèrement incliné par rapport à un plan vertical, la pince 27 matérialisant sa zone la plus élevée.

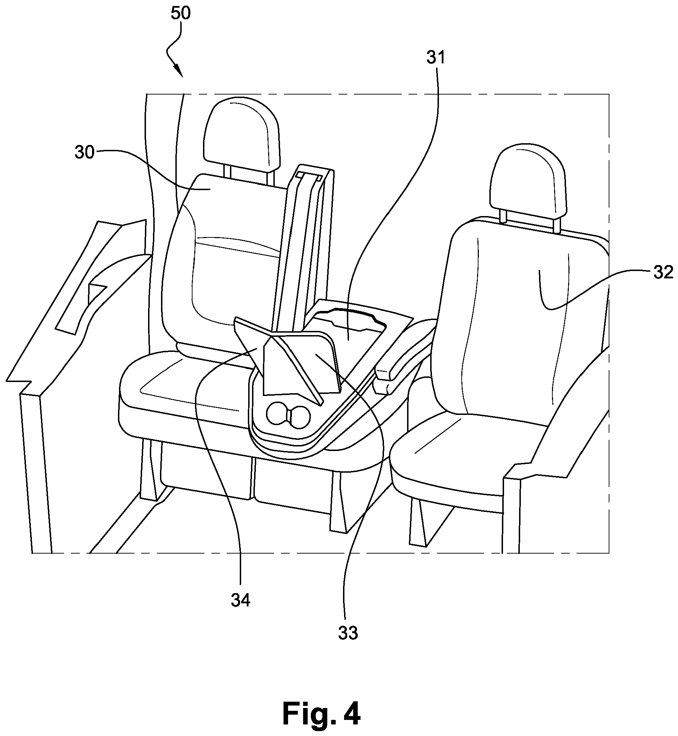

En se référant à la figure 4, un véhicule 50 automobile selon l'invention comprend une rangée de trois sièges 30, 31, 32 alignés, dont le siège central 31 est conforme au siège 1 précédemment décrit. La tablette 9 peut ainsi occuper une première position 33 orientée vers un premier siège 30 voisin, ou une deuxième position 34 orientée vers un autre siège voisin 32. Afin de lever toute ambigüité, la figure 4 matérialise la tablette 9 dans deux positions distinctes, qu'elle ne peut pas occuper simultanément, et non pas une seule tablette de forme complexe.

La mise en place d'une tablette 9 dans une position dressée sur le dossier 3 replié, à partir de sa position rangée à l'arrière du dossier 3, suit les étapes suivantes. Une pression sur le bouton-poussoir d'actionnement 20, libère la tablette 9, qui est retirée de l'évidement 12 au moyen d'un pivotement de ladite tablette 9 autour de ses deux lobes 26 placés dans le renfoncement 14 dudit évidement 12. La tablette 9 est amenée au dessus des deux rainures alignées 28 correspond à la position souhaitée. Une pression sur le bouton-poussoir 29 secondaire libère les rainures 28, et la tablette 9 est enfoncée dans lesdites rainures 28 au niveau de ses deux lobes 26. Un relâchement du bouton-poussoir secondaire 29 permet de verrouiller la tablette 9 dans les rainures 28 grâce aux éléments précontraints qui exercent une pression contre la tablette 9. Pour faire passer la tablette 9 de sa position dressée à sa position rangée, une pression sur le bouton poussoir secondaire 29 libère les rainures 28, et la tablette 9 peut alors être retirée desdites rainures 28. La tablette 9 est alors insérée dans l'évidement du cadre 11 de réception, en faisant d'abord pénétrer ses deux lobes 26 dans le renfoncement 14. La tablette 9 subit alors une rotation pour être amenée au contact du fond de l'évidement 12. Simultanément, une pression sur le bouton-poussoir d'actionnement 20 libère le mécanisme de blocage pour permettre l'insertion complète de la tablette 9 dans l'évidement 12. La pression sur ledit bouton 20 est alors relâchée pour verrouiller la tablette 9 dans sa position de rangement derrière le dossier 3.

## Revendications

1. Siège (1) de véhicule automobile comprenant une assise (2) et un dossier (3) repliable comportant une face arrière dotée d'une tablette (9), le dossier (3) étant apte à être replié sur l'assise (2) de manière à amener sa face arrière dans une position sensiblement horizontale, **caractérisé en ce que** la tablette (9) est apposée contre la face arrière du dossier (3) et est maintenu contre ladite face au moyen d'un mécanisme de blocage doté d'un organe d'actionnement (20), et **en ce qu'**une pression exercée sur ledit organe (20) permet de libérer la tablette (9) afin qu'elle puisse être retirée du dossier (3).

2. Siège de véhicule selon la revendication 1, **caractérisé en ce que** le mécanisme de blocage implique au moins une butée mécanique mise au contact de la tablette (9) pour la maintenir contre le dossier (3), et **en ce qu'**une pression exercée sur l'organe d'actionnement (20) provoque le déplacement de chaque butée.

3. Siège de véhicule selon l'une quelconque des revendications 1 ou 2, **caractérisé en ce que** le mécanisme de blocage est muni d'un élément de rappel conçu pour permettre à l'organe d'actionnement (20) de retrouver sa position initiale après avoir subi une pression.

4. Siège de véhicule selon l'une quelconque des revendications 1 à 3, **caractérisé en ce que** le dossier (3) présente un appui-tête (7) et un évidement (12) prévu pour loger la tablette (9), et **en ce que** le mécanisme de blocage est situé au niveau de l'extrémité (18) de l'évidement (12) la plus proche dudit appui-tête (7).

5. Siège de véhicule selon la revendication 4, **caractérisé en ce que** l'extrémité de l'évidement (12) la plus éloignée de l'appui-tête (7) présente un renfoncement (14), et **en ce que** la tablette (9) comporte un corps plan (40) terminé par un bord incliné (25), ladite tablette (9) étant logée dans l'évidement (12) de sorte que son bord incliné (25) vienne s'insérer dans ledit renfoncement (14), et de sorte que l'extrémité opposée dudit corps (40) interagisse avec le mécanisme de blocage.

6. Siège de véhicule selon la revendication 5, **caractérisé en ce que** le bord incliné (25) de la tablette (9) comporte deux lobes (26) proéminents, et **en ce que** l'évidement (12) présente une avancée centrale (19) surplombant ledit renfoncement (14), la tablette (9) étant logée dans l'évidement (12) de sorte que les deux lobes (26) soient insérés dans le renfoncement (14) de par et d'autre de ladite avancée centrale (19).

7. Siège de véhicule selon l'une quelconque des revendications 1 à 6, **caractérisé en ce que** la face arrière du dossier (1) est dotée d'au moins une rainure (28) permettant de recevoir la tablette (9) et la maintenir dans une position dressée lorsque ledit dossier (3) se retrouve sensiblement horizontal, et après que la tablette (9) eût été retirée de l'évidement (12).

8. Véhicule (50) comportant une rangée d'au moins deux sièges (30, 31, 32), **caractérisé en ce qu'**il comprend au moins un siège (1) conforme à l'une quelconque des revendications 1 à 7.

9. Véhicule selon la revendication 9, **caractérisé en ce qu'**il comporte une rangée de trois sièges (30, 31, 32), dont le siège central (31) est conforme à l'une quelconque des revendications 1 à 7.

## Patentansprüche

1. Kraftfahrzeugsitz (1), welcher ein Sitzteil (2) und eine klappbare Rückenlehne (3), die eine mit einer Platte (9) ausgestattete Rückseite aufweist, umfasst, wobei die Rückenlehne (3) auf das Sitzteil (2) umklappbar ist, derart, dass ihre Rückseite in eine im Wesentlichen horizontale Position gebracht wird, **dadurch gekennzeichnet, dass** die Platte (9) an der Rückseite der Rückenlehne (3) anliegend angebracht ist und mittels eines Arretiermechanismus, der mit einem Betätigungsorgan (20) ausgestattet ist, an dieser Seite gehalten wird, und dadurch, dass ein auf das Organ (20) ausgeübter Druck ermöglicht, die Platte (9) freizugeben, damit sie aus der Rückenlehne (3) herausgezogen werden kann.

2. Fahrzeugsitz nach Anspruch 1, **dadurch gekennzeichnet, dass** der Arretiermechanismus wenigstens einen mechanischen Anschlag mit einschließt, der mit der Platte (9) in Kontakt gebracht wird, um sie an der Rückenlehne (3) anliegend zu halten, und dadurch, dass ein auf das Betätigungsorgan (20) ausgeübter Druck die Verlagerung jedes Anschlags hervorruft.

3. Fahrzeugsitz nach einem der Ansprüche 1 oder 2, **dadurch gekennzeichnet, dass** der Arretiermechanismus mit einem Rückholelement versehen ist, das dafür ausgebildet ist, dem Betätigungsorgan (20) zu ermöglichen, seine anfängliche Position wieder einzunehmen, nachdem ein Druck auf es ausgeübt wurde.

4. Fahrzeugsitz nach einem der Ansprüche 1 bis 3, **dadurch gekennzeichnet, dass** die Rückenlehne (3) eine Kopfstütze (7) und eine Aussparung (12), die dafür vorgesehen ist, die Platte (9) aufzunehmen, aufweist, und dadurch, dass sich der Arretiermechanismus an dem Ende (18) der Aussparung (12) befindet, das der Kopfstütze (7) am nächsten ist.

5. Fahrzeugsitz nach Anspruch 4, **dadurch gekennzeichnet, dass** das Ende der Aussparung (12), das von der Kopfstütze (7) am weitesten entfernt ist, eine Vertiefung (14) aufweist, und dadurch, dass die Platte (9) einen ebenen Körper (40) aufweist, der von einem geneigten Rand (25) abgeschlossen wird, wobei die Platte (9) so in der Aussparung (12) aufgenommen wird, dass ihr geneigter Rand (25) in die Vertiefung (14) eingesetzt wird, und so, dass das entgegengesetzte Ende des Körpers (40) mit dem Arretiermechanismus interagiert.

6. Fahrzeugsitz nach Anspruch 5, **dadurch gekennzeichnet, dass** der geneigte Rand (25) der Platte (9) zwei vorspringende Ansätze (26) aufweist, und dadurch, dass die Aussparung (12) einen zentralen Vorsprung (19) aufweist, der in die Vertiefung (14) hineinragt, wobei die Platte (9) so in der Aussparung (12) aufgenommen wird, dass die beiden Ansätze (26) beiderseits des zentralen Vorsprungs (19) in die Vertiefung (14) eingesetzt werden.

7. Fahrzeugsitz nach einem der Ansprüche 1 bis 6, **dadurch gekennzeichnet, dass** die Rückseite der Rückenlehne (1) mit wenigstens einer Rille (28) versehen ist, die es gestattet, die Platte (9) aufzunehmen und sie in einer aufrechten Position zu halten, wenn die Rückenlehne (3) im Wesentlichen horizontal angeordnet ist und nachdem die Platte (9) aus der Aussparung (12) entnommen worden ist.

8. Fahrzeug (50), welches eine Reihe von wenigstens zwei Sitzen (30, 31, 32) aufweist, **dadurch gekennzeichnet, dass** es wenigstens einen Sitz (1) nach einem der Ansprüche 1 bis 7 aufweist.

9. Fahrzeug nach Anspruch 9, **dadurch gekennzeichnet, dass** es eine Reihe von drei Sitzen (30, 31, 32) aufweist, von denen der mittlere Sitz (31) einem der Ansprüche 1 bis 7 entspricht.

## Claims

1. Seat (1) of a motor vehicle comprising a seat member (2) and a foldable backrest (3) comprising a rear face which is provided with a tray (9), the backrest (3) being capable of being folded onto the seat member (2) so as to bring its rear face into a substantially horizontal position, **characterized in that** the tray (9) is fitted against the rear face of the backrest (3) and is retained against said face by means of a locking mechanism which is provided with an activation member (20), and **in that** a pressure applied to said member (20) allows the tray (9) to be released so that it can be withdrawn from the backrest (3).

2. Vehicle seat according to Claim 1, **characterized in that** the locking mechanism involves at least one mechanical stop which is brought into contact with the tray (9) in order to maintain it against the backrest (3), and **in that** a pressure applied to the activation member (20) brings about the movement of each stop.

3. Vehicle seat according to either Claim 1 or 2, **characterized in that** the locking mechanism is provided with a return element which is configured to allow the activation member (20) to resume its initial position after being subjected to a pressure.

4. Vehicle seat according to any one of Claims 1 to 3, **characterized in that** the backrest (3) has a headrest (7) and a recess (12) which is provided for receiving the tray (9), and **in that** the locking mechanism is located in the region of the end (18) of the recess (12) nearest said headrest (7).

5. Vehicle seat according to Claim 4, **characterized in that** the end of the recess (12) furthest away from the headrest (7) has an indentation (14), and **in that** the tray (9) comprises a planar body (40) which terminates in an inclined edge (25), said tray (9) being received in the recess (12) so that its inclined edge (25) is inserted in said indentation (14) and so that the opposite end of said body (40) interacts with the locking mechanism.

6. Vehicle seat according to Claim 5, **characterized in that** the inclined edge (25) of the tray (9) comprises two prominent lobes (26), and **in that** the recess (12) has a central overhang (19) which overhangs said indentation (14), the tray (9) being received in the recess (12) so that the two lobes (26) are inserted in the indentation (14) at one side and the other of said central overhang (19) .

7. Vehicle seat according to any one of Claims 1 to 6, **characterized in that** the rear face of the backrest (1) is provided with at least one groove (28) which allows the tray (9) to be received and retained in a deployed position when said backrest (3) is substantially horizontal, and after the tray (9) has been withdrawn from the recess (12).

8. Vehicle (50) which comprises a row of at least two seats (30, 31, 32), **characterized in that** it comprises at least one seat (1) according to any one of Claims 1 to 7.

9. Vehicle according to Claim 9, **characterized in that** it comprises a row of three seats (30, 31, 32), the central seat (31) of which is according to any one of Claims 1 to 7.
